Europäisches Patentamt

(19) European Patent Office  (11) Numéro de publication : **0 069 964**

Office européen des brevets  **B1**

(12)  **FASCICULE DE BREVET EUROPÉEN**

(45) Date de publication du fascicule du brevet :  (51) Int. Cl.⁴ : **H 04 M 19/00, H 02 J  9/06**
30.10.85

(21) Numéro de dépôt : **82106000.1**

(22) Date de dépôt : **06.07.82**

(54) **Dispositif de distribution d'énergie.**

(30) Priorité : **10.07.81 FR 8113645**

(43) Date de publication de la demande :
**19.01.83 Bulletin 83/03**

(45) Mention de la délivrance du brevet :
**30.10.85 Bulletin 85/44**

(84) Etats contractants désignés :
**BE CH DE FR GB IT LI NL SE**

(56) Documents cités :
**ERICSSON REVIEW, vol. 56, no. 2, 1979, pages 80-83,
Stockholm (SE); B. VILKLUND et al.: "Power supply
units in the M5 construction practice"
PROCEEDINGS OF THE NATIONAL ELECTRONICS
CONFERENCE, vol. 31, 1977, pages 106-111, Oak
Brook Illinois (USA); P.L. HUNTER: "A modular DC to
DC converter power plant. Concept for large electronic telephone systems"**

(73) Titulaire : **COMPAGNIE INDUSTRIELLE DES TELE-
COMMUNICATIONS CIT-ALCATEL S.A. dite:
12, rue de la Baume
F-75008 Paris (FR)**

(72) Inventeur : **Nouet, Christian
11, avenue Pierre Sémard
F-91700 Sainte Geneviève des Bois (FR)**

(74) Mandataire : **Weinmiller, Jürgen et al
Zeppelinstrasse 63
D-8000 München 80 (DE)**

## Description

L'invention concerne un dispositif de distribution d'énergie électrique pour ensembles électroniques. Elle est applicable en particulier pour l'alimentation électrique des autocommutateurs.

Les ensembles électroniques, dont la fiabilité augmente sans cesse, exigent généralement une alimentation à l'épreuve de tout risque d'interruption.

Parallèlement on demande aux alimentations d'être le plus modulaires et le plus universelles possible et aussi d'avoir un rendement élevé.

Une première étape consiste à améliorer les performances des sources d'énergie primaires. En particulier dans le document FR-A-2 477 795 « Système de distribution d'énergie pour ensembles électroniques » on a décrit un système de distribution d'énergie dans lequel les sources primaires sont standardisées et ne nécessitent plus de régulation.

D'autre part, notamment dans des applications aux autocommutateurs, une décentralisation des équipements en alimentant directement par le secteur alternatif les bâtis d'une installation apporte une diminution du coût de transport de l'énergie et une amélioration de la modularité.

Cependant la décentralisation entraîne une multiplication et une augmentation de volume des équipements au niveau secondaire, c'est-à-dire des bâtis, et perd une partie de ses avantages de modularité, si le réseau est secouru par une source d'énergie centralisée. Il est intéressant de rechercher un dispositif de secours également modulaire.

On connaît également par le document ERICS-SON REVIEW, Vol. 56, n° 2, 1979, pages 80-83, un dispositif de distribution d'énergie organisé en trois niveaux : primaire, secondaire, tertiaire. Le niveau secondaire est constitué par la tension batterie qui est distribuée au niveau tertiaire lequel est soit du type centralisé soit du type décentralisé. Ce dispositif présente l'inconvénient d'un niveau secondaire commun à toutes les sources du niveau tertiaire, de sorte qu'une panne du niveau secondaire affecte l'ensemble du niveau tertiaire. Si l'on veut prévoir un secours pour le niveau secondaire, il faut pratiquement doubler l'équipement du niveau secondaire, solution encombrante et onéreuse.

L'invention a pour but de réaliser un dispositif de distrubition d'énergie permettant de supprimer pratiquement les inconvénients cités plus haut, et permettant d'autre part d'améliorer fortement le rendement de l'installation.

L'invention a pour objet un dispositif de distribution d'énergie à trois niveaux de tension, notamment pour un autocommutateur comportant des équipements utilisateurs électroniques alimentés en basse tension à partir d'un réseau alternatif à haute tension, dans lequel les équipements sont organisés en bâtis alimentés en haute tension à partir du niveau primaire relié audit réseau, caractérisé par le fait que les bâtis et groupes de bâtis comportant le niveau secondaire d'alimentation formé de sources à isolement galvanique fournissant au moins une tension intermédiaire fixée par rapport à un potentiel de référence dudit dispositif et le niveau tertiaire formé de sources d'alimentation reliées aux équipements utilisateurs.

Un exemple de réalisation va être décrit ci-après à l'aide des figures suivantes qui représentent :

Figure 1   le diagramme général d'un dispositif de distribution d'énergie décentralisé suivant l'invention,

Figure 2   une variante de réalisation du niveau secondaire du dispositif de la figure 1,

Figure 3   le schéma d'une source secondaire secourue par une batterie et gérée au moyen d'une liaison de télécommande,

Figure 4   le schéma d'un dispositif d'alimentation de périphériques informatiques,

Figure 5   une application de l'invention à l'alimentation individuelle de bâtis,

Figure 6   une autre application de l'invention à l'alimentation d'une travée.

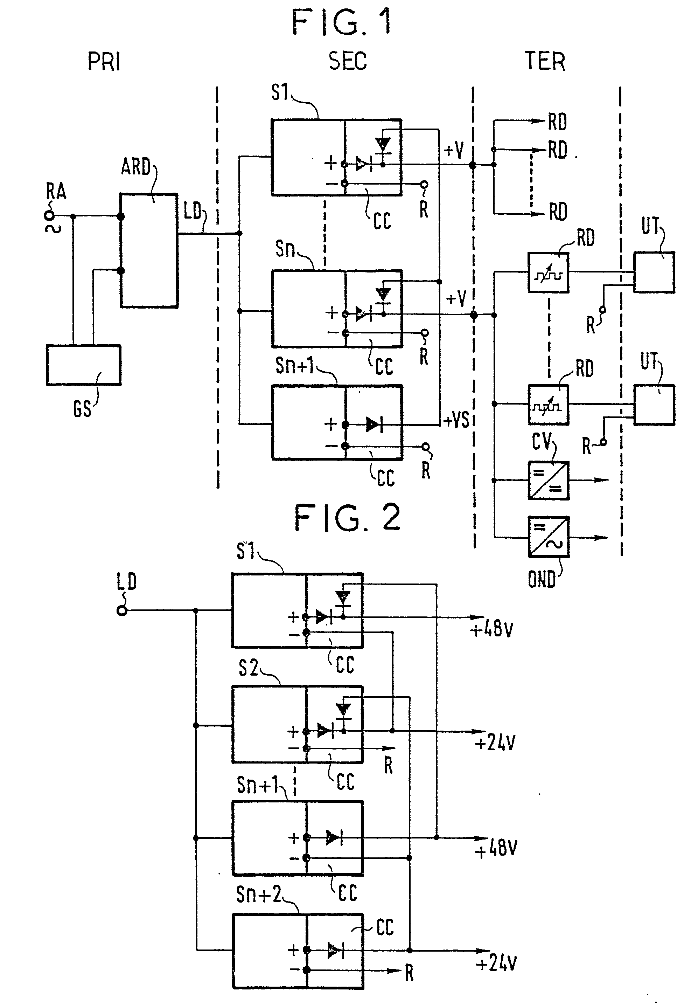

Le dispositif de distribution d'énergie de l'invention, représenté figure 1 comporte trois niveaux entre un réseau d'alimentation RA relié au secteur et des équipements et/ou sous-ensembles utilisateurs UT : les niveaux primaire PRI, secondaire SEC et tertiaire TER.

Le niveau primaire est une simple distribution associée à un moyen de secours. Il comporte une armoire de distribution ARD reliée au niveau secondaire SEC par une ligne de distribution LD. En entrée l'armoire de distribution ARD est reliée au secteur alternatif RA et à une source de secours GS.

Au niveau secondaire on trouve une source (S1 à Sn) par ensemble d'équipements utilisateurs, un ensemble étant constitué par exemple par 1 ou 2 bâtis suivant la nature des équipements. C'est à ce niveau qu'est réalisé l'isolement galvanique entre réseau et utilisation. Les sources peuvent être des convertisseurs, des transformateurs, etc... La source de secours GS est par exemple une source à haute tension continue constituée de batteries et de redresseurs reliés au réseau alternatif pour la recharge des batteries. Dans ce cas on utilise au niveau secondaire des convertisseurs mixtes dont l'entrée peut être alimentée indifféremment en alternatif ou en continu. Il suffira donc d'avoir une ligne de distribution LD unique véhiculant normalement la tension alternative et en cas de panne du réseau, la tension continue fournie par les batteries de la source de secours GS.

Dans de nombreuses applications on utilise principalement dans les sources secondaires S1 à Sn des convertisseurs à sortie en courant continu. On choisit de préférence une tension de sortie unique qui permet de standardiser les équipements et de mettre des équipements de secours communs.

Les tensions plus élevées que la tension de sortie unique sont obtenues par couplage série comme indiqué plus loin, et les tensions plus faibles par réglage au niveau tertiaire.

Dans l'exemple de réalisation de la figure 1 une source secondaire fournit une tension positive + V à travers un circuit de couplage à diodes CC. Le pôle négatif de la source est relié au point de référence de l'installation R (zéro logique). Cette disposition permet de secourir les n sources secondaires S1 à Sn identiques par une ou plusieurs sources de secours Sn + 1 au niveau secondaire.

Au tertiaire on a des alimentations sans isolement, par exemple des alimentations à découpage RD à tension réglable par variation de la largeur d'impulsion. On peut aussi avoir d'autres sources tertaires tels que convertisseurs CV ou onduleurs OND.

Les équipements ou sous-ensembles utilisateurs UT sont reliés à la sortie du tertiaire et au point de référence R. Naturellement, dans le cas de sous-ensembles complexes, il peut y avoir un quatrième niveau d'alimentation ; on aura par exemple à la sortie du niveau secondaire V = + 24 volts, une alimentation au tertiaire à sortie en 12 volts, puis des convertisseurs à sortie − 12 V, + 5 V, − 5 V etc...

Dans l'exemple de la figure 2 on utilise également des sources secondaires V = + 24 volts. Une source en 48 volts est obtenue par couplage série de sources 24 volts. La même disposition est utilisée pour les sources de secours Sn + 1, Sn + 2.

Au niveau secondaire le choix d'une tension·de 24 volts par source secondaire permet l'utilisation, dans les circuits de couplage CC, de diodes Schottky qui ont une faible chute de tension, d'où un rendement amélioré.

Le dispositif suivant l'invention permet d'utiliser au niveau primaire un simple groupe électrogène de secours, au lieu d'un ensemble batterie/redresseurs reliés au réseau, solution coûteuse en place et en matériel, et au niveau secondaire, un secours par batterie de chaque source secondaire. L'autonomie de ces batteries peut être faible, par exemple 15 minutes. Elle doit seulement permettre d'attendre la mise en service du groupe électrogène.

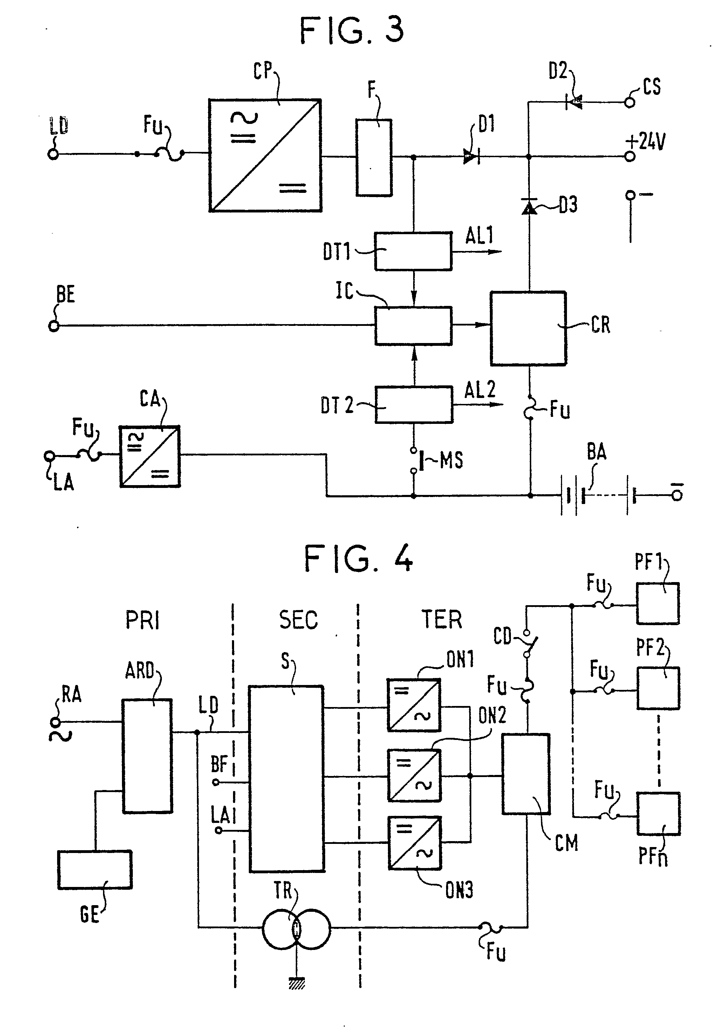

La figure 3 représente une source secondaire secourue par une batterie de faible autonomie. La ligne de distribution LD est reliée à un convertisseur principal CP non régulé dont la sortie fournit la tension continue + 24 volts par l'intermédiaire d'un filtre F et d'une diode D1. Une diode D2 permet le secours par une autre source secondaire reliée à une entrée CS.

Une batterie BA est reliée également à la sortie + 24 volts à travers un commutateur CR et une diode de découplage D4. Le commutateur permet de commander la mise en service ou hors service de la batterie.

La batterie est chargée et maintenue en charge par une source auxiliaire CA, par exemple un convertisseur régulé de faible puissance, alimentée à partir de l'armoire de distribution ARD par une ligne auxiliaire LA. Naturellement les caractéristiques d'utilisation des ligens LA et LD peuvent être les mêmes. Dans ce cas on utilisera une seule ligne pour alimenter les convertisseurs CP et les convertisseurs CA. Le dispositif comporte également des détecteurs de sous-tension DT1, DT2 fournissant une alarme AL1, AL2 lorsque la tension tombe en dessous d'un seuil déterminé. Le détecteur DT1 surveille la tension de sortie du convertisseur principal CP, et le détecteur DT2 surveille la tension de la batterie. Un interrupteur manuel MS permet la mise hors service de la batterie. D'autre part les circuits sont protégés par des fusibles FU. Le dispositif représenté figure 3 permet également la télécommande de la source secondaire. En effet pour gérer de matière optimale l'ensemble des sources secondaires il est intéressant de centraliser les informations de fonctionnement et également de prévoir une gestion par ordinateur.

En particulier la télécommande permet de n'utiliser la batterie BA que dans des cas de figure bien déterminés : par exemple il est inutile de décharger cette batterie en cas de court-circuit du convertisseur principal, ou même en cas de panne si la source secondaire est secourue.

Le dispositif comporte une interface de commande IC reliée à une logique de commande centrale (non représentée) par un bus d'échanges BE. L'interface IC commande le commutateur CR. Elle est reliée également aux détecteurs DT1 et DT2.

L'interface comportera par exemple un circuit de commande du commutateur et un circuit d'exploration permettant la lecture par le calculateur des informations suivantes :
— état du commutateur,
— état des détecteurs,
— état des fusibles,
— informations numériques données par des circuits de mesure non représentés (tensions et débits d'entrée et de sortie, courant fourni par la batterie et par la source de secours secondaire reliée à l'entrée CS, etc...).

Le circuit de commande du commutateur sera par exemple formé d'une bascule et d'un circuit de décision tenant compte de l'état des détecteurs et d'une commande de validation fournie par le bus BE.

Le dispositif suivant l'invention est également applicable à une installation mixte comportant des ensembles alimentés en basse tension et des ensembles alimentés en tension alternative élevée, par exemple 220 ou 380 V. C'est le cas par exemple d'un autocommutateur comportant des périphériques informatiques.

Une telle application est représentée à la figure 4.

Les périphériques PF1 à PFn ont une double alimentation :
par onduleurs (ON1 à ON3) alimentés par un ensemble S de sources secondaires,
par transformateur à écran TR relié à l'armoire de distribution ARD.

Suivant les conditions d'utilisation des périphériques et la puissance qu'ils consomment, par rapport à la puissance totale de l'installation, il est possible d'utiliser comme alimentation principale l'une ou l'autre des alimentations, la seconde servant de secours. Le basculement d'une alimentation sur l'autre est réalisé par un commutateur CM. Les périphériques sont mis en service par un commutateur de départ CD.

La source secondaire est par exemple du type indiqué à la figure 2 permettant de fournir du + 48 V secouru. Chaque source secondaire peut également être secourue par batterie interne, comme indiqué à la figure 3.

L'implantation d'un dispositif de distribution d'énergie décentralisé est tout à fait adaptée aux autocommutateurs à structure décentralisée et modulaire, mais elle est également intéressante dans le cas d'autres types d'installations existantes.

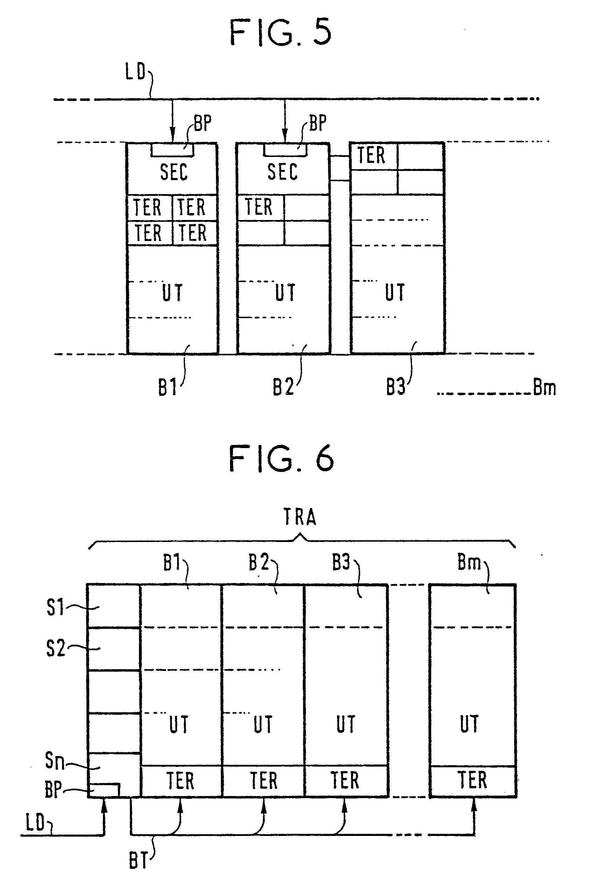

La figure 5 montre un exemple d'implantation dans une installation modulaire.

Les équipements utilisateurs UT à alimenter sont répartis dans des bâtis B1 à Bn d'une manière optimale en fonction de la capacité de l'installation.

En supposant que l'on ait une source secondaire standard, certains bâtis pourront nécessiter par exemple une source secondaire par bâti, et d'autres seulement une source secondaire pour deux bâtis.

Dans l'exemple représenté, la ligne de distribution LD arrive par le haut sur un boîtier protégé BP inaccessible au personnel travaillant habituellement dans l'installation.

La figure 6 montre une application à un central dans lequel, avec une distribution d'énergie centralisée, les bâtis sont organisés en travées TRA alimentées par des modules de distribution disposés en bout de travée. Selon l'invention on a remplacé les modules par des sources secondaires, les sources tertiaires étant localisées dans les· bâtis. Dans le cas de remplacement du dispositif de distribution dans une installation existante les modifications à faire peuvent donc être réduites, et les anciens convertisseurs présents dans les bâtis pourront souvent être conservés comme source tertiaire.

A la figure 6 on montre le cas d'une ligne de distribution LD et d'une ligne basse tension BT entre les niveaux secondaires et tertiaires, passant par un faux plancher.

Un autre avantage du dispositif décentralisé, qui apparaît par exemple sur la figure 4, provient de l'indépendance des sources secondaires. Une perturbation provoquée par un équipement ne se propage pas. D'autre part les surtensions dues aux mise en route de certains appareils tels que les périphériques PF, sont fortement réduites.

**Revendications**

1. Dispositif de distribution d'énergie à trois niveaux de tension (PRI, SEC, TER), notamment pour un autocommutateur comportant des équipements utilisateurs électroniques (UT) alimentés en basse tension à partir d'un réseau alternatif (RA) à haute tension, dans lequel les équipements sont organisés en bâtis et groupes de bâtis alimentés directement en haute tension à partir du niveau primaire (PRI) relié audit réseau, caractérisé par le fait que les bâtis et groupes de bâtis comportant le niveau secondaire d'alimentation (SEC) formé de sources (S1 à Sn) à isolement galvanique fournissant au moins une tension intermédiaire fixée par rapport à un potentiel de référence dudit dispositif (R) et le niveau tertiaire (TER) formé de sources d'alimentation (RD, CV, OND) reliées aux équipements utilisateurs (UT).

2. Dispositif de distribution d'énergie suivant la revendication 1, dans lequel la distribution primaire est secourue par une source de secours (GS) à haute tension continue et dans lequel les sources du niveau secondaire (SEC) peuvent être alimentées en haute tension alternative ou continue, caractérisé par le fait que le niveau primaire et le niveau secondaire sont reliés par une ligne de distribution (LD) unique alimentée normalement par le réseau, et, en cas de panne de celui-ci, par la source de secours (GS).

3. Dispositif suivant la revendication 1 dans lequel on utilise, au niveau secondaire, au moins un premier type de source standard fournissant une tension secondaire, au moins un deuxième type de source standard fournissant une tension de sortie positive (+ V) par rapport au potentiel de référence (R), caractérisé par le fait que l'on réalise des ensembles modulaires par couplage d'au moins deux sources à l'aide de circuits de couplage (CC) à diodes inclus dans chaque source secondaire.

4. Dispositif suivant la revendication 3, caractérisé par le fait que le circuit de couplage (CC) est réalisé avec des diodes de type Schottky.

5. Dispositif suivant la revendication 3, caractérisé par le fait qu'un nombre p de sources secondaires de secours ($S_{n+1}$, Fig. 1 ; $S_{n+1}$, $S_{n+2}$, Fig. 2) sont couplées en parallèle à n sources secondaires (S1 à Sn).

6. Dispositif suivant la revendication 3, caractérisé par le fait qu'au moins une source secondaire est secourue par une batterie (BA).

7. Dispositif suivant la revendication 6, caractérisé par le fait que la batterie (BA) est alimentée par une source auxiliaire (CA) à isolement galvanique.

8. Dispositif suivant la revendication 6, caractérisé par le fait que la batterie est reliée au circuit de couplage (CC) par un commutateur électronique (CR).

9. Dispositif suivant la revendication 6, caractérisé par le fait que la tension de sortie de la source secondaire et celle de la batterie (BA) sont surveillées séparément par des détecteurs à seuil (DT1, DT2) délivrant une alarme en cas de chute de tension au-delà d'un seuil fixé.

10. Dispositif suivant la revendication 8, caractérisé par le fait que la source secondaire comporte une interface (IC) reliée à un ordinateur par un bus d'échange (BE), ladite interface comportant des moyens pour commander le commutateur (CR) et des moyens pour émettre vers l'ordinateur les informations d'état concernant les différents organes de la source secondaire.

11. Dispositif suivant la revendication 3 pour une installation comportant des équipements utilisateurs à alimenter en basse tension (UT) et des équipements utilisateurs à alimenter en haute tension (UT) et des équipements utilisateurs à alimenter en haute tension (PF1 à PFn) pouvant être alimentés par deux sources distinctes par l'intermédiaire d'un commutateur (CM), caractérisé par le fait que l'une desdites sources est constituée par un ensemble (S) de sources secondaires associé à un ensemble d'onduleurs (ON1 à ON3).

12. Dispositif suivant la revendication 1, caractérisé par le fait que les sources du niveau tertiaire sont des alimentations à découpage.

13. Dispositif suivant la revendication 1 pour une installation modulaire dont les bâtis et groupes de bâtis sont alimentés séparément par la distribution primaire, caractérisé par le fait qu'une source secondaire est implantée dans chaque bâti ou groupe de bâtis.

14. Dispositif suivant la revendication 1 pour une installation dont les bâtis sont organisés en travées alimentées par des moyens regroupés en extrémité de travée, caractérisé par le fait qu'un groupe de sources secondaires implanté en bout de travée est relié au primaire par une ligne de distribution (LD), et aux sources du niveau tertiaire (TER), implantées dans les bâtis des équipements qu'elles alimentent, par une ligne basse tension (BT).


**Claims**

1. A power distribution device having three voltage levels (PRI, SEC, TER), in particular for an exchange comprising electronic user equipments (UT), which are powered at low voltage with electricity derived from a high voltage AC network (RA) and in which the equipments are disposed in racks and groups of racks fed directly with high voltage from the primary level (PRI) connected to said network, characterized in that the racks and groups of racks comprise on the one hand the secondary feed level (SEC) consisting of galvanically insulated sources (S1 to Sn), supplying at least one intermediate voltage with respect to a reference potential (R) of said device, and on the other hand the tertiary level (TER) consisting of feed sources (RD, CV, OND) connected to the user equipments (UT).

2. A power distribution device according to claim 1, in which the primary distribution is backed up by an emergency source (GS) of high DC voltage and in which the secondary level sources (SEC) are conceived to be fed by an AC or a DC high voltage, characterized in that the primary level and the secondary level are connected by a common distribution line (LD) which is normally fed by the network and in the event of a failure of the latter by the emergency source (GS).

3. A device according to claim 1, in which at least one first standardized type of source furnishing a secondary voltage and at least one second standardized type of source is used furnishing a positive output voltage (+ V) with respect to the reference potential (R), characterized in that modulars assemblies are realized by coupling at least two sources by means of diode coupling circuits (CC) included in each secondary source.

4. A device according to claim 3, characterized in that the coupling circuit (CC) is equipped with Schottky-diodes.

5. A device according to claim 3, characterized in that p secondary emergency sources ($S_{n+1}$, fig. 1 ; $S_{n+1}$, $S_{n+2}$, fig. 2) are coupled in parallel to n secondary sources (S1 to Sn).

6. A device according to claim 3, characterized in that at least one secondary source is backed up by a battery (BA).

7. A device according to claim 6, characterized in that the battery is fed by a galvanically insulated auxiliary source (CA).

8. A device according to claim 6, characterized in that the battery is connected to the coupling circuit (CC) via an electronic swith (CR).

9. A device according to claim 6, characterized in that the output voltage of the secondary source and the output voltage of the battery (BA) are separately monitored by threshold detectors (DT1, DT2) supplying an alarm in case of a voltage drop below a fixed threshold.

10. A device according to claim 8, characterized in that the secondary source comprises an interface (IC) connected to a computer via an exchange bus (BE), said interface comprising means for controlling the switch (CR) and means for transmitting to the computer the status informations concerning the different components of the secondary source.

11. A device according to claim 3, for an installation comprising user equipments which are to be fed by a low voltage (UT) and user equipments which are to be fed by a high voltage (PF1 to PFn) and which can be fed from two distinct sources through a switch (CM), characterized in that one of said sources consists of a group (S) of secondary sources associated to a group of DC-to-AC converters (ON1 to ON3).

12. A device according to claim 1, characterized in that the sources of the tertiary level are chopper supply units.

13. A device according to claim 1, for a modular installation in which the racks and groups of racks are separately fed by the primary distribution, characterized in that a secondary source is disposed in each rack or group of racks.

14. A device according to claim 1 for an installation in which the racks are organized in banks which are fed by means disposed at one end of the bank, characterized in that a group of secondary sources disposed at the end of a bank is connected to the primary level by a distribution line (LD) and to the tertiary level sources (TER), which are disposed in the racks of the associated equipments, by a low voltage line (BT).

## Patentansprüche

1. Vorrichtung zur Energieverteilung über drei Spannungsniveaus (PRI, SEC, TER), insbesondere für eine Selbstwählanlage mit elektronischen Verbrauchereinrichtungen (UT), die mit niedriger Spannung von einem Wechselspannungsnetz (RA) hohen Pegels gespeist werden, wobei die Einrichtungen in Gestellen und Gestellgruppen untergebracht sind, die direkt mit der Spannung hohen Pegels ausgehend von dem mit dem Netz verbundenen Primärniveau (PRI) gespeist werden, dadurch gekennzeichnet, daß die Gestelle und Gestellgruppen einerseits das sekundäre Speiseniveau (SEC), das von Quellen (S1 bis Sn) mit galvanischer Trennung gebildet wird, wobei diese Quellen mindestens eine Zwischenspannung liefern, die bezüglich eines Bezugspotentials (R) der Vorrichtung fixiert ist, und andererseits das tertiäre Niveau (TER) enthalten, das von Speisequellen (RD, CV, OND) gebildet wird, die an die Verbrauchereinrichtungen (UT) angeschlossen sind.

2. Vorrichtung zur Energieverteilung nach Anspruch 1, in der die Primärverteilung durch eine eine hohe Gleichspannung liefernde Notstromquelle (GS) abgesichert ist und der die Quellen des Sekundärniveaus (SEC) entweder mit einer hohen Wechselspannung oder einer hohen Gleichspannung gespeist werden können, dadurch gekennzeichnet, daß das Primärniveau und das Sekundärniveau über eine gemeinsame Verteilerleitung (LD) miteinander verbunden sind, die normalerweise aus dem Netz und bei Netzausfall aus der Notstromquelle (GS) gespeist wird.

3. Vorrichtung nach Anspruch 1, in der auf dem Sekundärniveau mindestens eine Standardquelle eines ersten Typs, die eine sekundäre Spannung liefert, und mindestens eine Standardquelle eines zweiten Typs verwendet wird, die eine positive Ausgangsspannung (+ V) bezüglich des Bezugspotentials (R) liefert, dadurch gekennzeichnet, daß ein modularer Aufbau durch Kopplung mindestens zweier Quellen mithilfe von Dioden-Koppelkreisen (CC) erreicht wird, die in jeder Sekundärquelle enthalten sind.

4. Vorrichtung nach Anspruch 3, dadurch gekennzeichnet, daß der Koppelkreis (CC) mit Schottky-Dioden hergestellt ist.

5. Vorrichtung nach Anspruch 3, dadurch gekennzeichnet, daß p Sekundär-Notstromquellem ($S_{n+1}$, Fig. 1; $S_{n+1}$, $S_{n+2}$, Fig. 2) parallel an n Sekundärquellen (S1 bis Sn) angekoppelt sind.

6. Vorrichtung nach Anspruch 3, dadurch gekennzeichnet, daß mindestens eine Sekundärquelle über eine Batterie (BA) abgesichert ist.

7. Vorrichtung nach Anspruch 6, dadurch gekennzeichnet, daß die Batterie (BA) aus einer Hilfsquelle (CA) mit galvanischer Trennung gespeist wird.

8. Vorrichtung nach Anspruch 6, dadurch gekennzeichnet, daß die Batterie an den Koppelkreis (CC) über einen elektronischen Schalter (CR) angeschlossen ist.

9. Vorrichtung nach Anspruch 6, dadurch gekennzeichnet, daß die Ausgangsspannung der Sekundärquelle und die der Batterie (BA) getrennt von Schwellendetektoren (DT1, DT2) überwacht werden, die einen Alarm liefern, wenn die Spannung unter eine vorgegebene Schwelle absinkt.

10. Vorrichtung nach Anspruch 8, dadurch gekennzeichnet, daß die Sekundärquelle ein Interface (IC) aufweist, das an einen Rechner über eine Austauschschiene (BE) angeschlossen ist und Mittel zur Steuerung des Schalters (CR) und Mittel zur Übersendung der Zustandsinformation betreffend die verschiedenen Organe der Sekundärquelle zum Rechner aufweist.

11. Vorrichtung nach Anspruch 3 für eine Anlage, die mit niedriger Spannung zu speisende Verbrauchereinrichtungen (UT) und mit hoher Spannung zu speisende Verbrauchereinrichtungen (PF1 bis PFn) enthält, die von zwei getrennten Quellen über einen Schalter (CM) versorgt werden können, dadurch gekennzeichnet, daß eine dieser Quellen aus einer Gruppe (S) von Sekundärquellen besteht, die einer Gruppe von Wechselrichtern (ON1 bis ON3) zugeordnet ist.

12. Vorrichtung nach Anspruch 1, dadurch gekennzeichnet, daß die Quellen der tertiären Niveaus Phasenschnitt-Netzgeräte sind.

13. Vorrichtung nach Anspruch 1 für eine modulare Anlage, deren Gestelle und Gestellgruppen getrennt von der Primärversorgung gespeist werden, dadurch gekennzeichnet, daß eine Sekundärquelle in jedem Gestell oder jeder Gestellgruppe angeordnet ist.

14. Vorrichtung nach Anspruch 1 für eine Anlage, deren Gestelle in Reihen angeordnet sind, die von am Ende der Reihe gruppierten Mitteln gespeist werden, dadurch gekennzeichnet, daß eine am Ende der Reihe liegende Gruppe von Sekundärquellen an das Primärniveau über eine Verteilerleitung (LD) und an die Quellen des tertiären Niveaus (TER), die in den Einrichtungsgestellen, die sie versorgen, untergebracht sind, über eine Niederspannungsleitung (BT) angeschlossen ist.

# FIG. 1

PRI    SEC    TER

# FIG. 2

# FIG. 3

# FIG. 4

# FIG. 5

# FIG. 6